(19) Europäisches Patentamt
European Patent Office
Office européen des brevets

(11) **EP 2 289 754 B1**

(12) **EUROPEAN PATENT SPECIFICATION**

(45) Date of publication and mention
of the grant of the patent:
**29.04.2015 Bulletin 2015/18**

(21) Application number: **09169060.2**

(22) Date of filing: **31.08.2009**

(51) Int Cl.:
*B60W 30/08* (2012.01)         *B60T 7/22* (2006.01)
*G08G 1/16* (2006.01)          *G06K 9/00* (2006.01)
*B60W 30/095* (2012.01)        *G06K 9/62* (2006.01)

(54) **Vehicle or traffic control method and system**

Fahrzeug- oder Verkehrskontrollverfahren und System

Procédé et système de contrôle de véhicule ou de trafic

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(43) Date of publication of application:
**02.03.2011 Bulletin 2011/09**

(73) Proprietors:
• **Toyota Motor Europe NV/SA
1140 Brussels (BE)**
• **INRIA - Institut National de Recherche en
Informatique et en Automatique
78153 Le Chesnay Cedex (FR)**

(72) Inventors:
• **Laugier, Christian
38330 Montbonnot (FR)**
• **Tay Meng Keat, Christopher
603285 Singapore (SG)**
• **Mazer, Emmanuel
38330 Biviers (FR)**

• **Mekhnacha, Kamel
38000 Grenoble (FR)**
• **Yanagihara, Hiromichi
1150 Woluwe-Saint-Pierre (BE)**
• **Sakai, Katsuhiro
Kanagawa 257-0017 (JP)**
• **Othmezouri, Gabriel
1050 Brussels (BE)**

(74) Representative: **Intès, Didier Gérard André et al
Cabinet Beau de Loménie
158, rue de l'Université
75340 Paris Cedex 07 (FR)**

(56) References cited:
EP-A1- 1 898 232          WO-A1-2007/028932
JP-A- 2004 258 889        JP-A- 2008 296 641
US-A1- 2005 086 003       US-A1- 2008 309 468
US-B1- 7 167 799

**Description**

FIELD OF THE INVENTION

The invention relates to a driving assistance method or a vehicle or traffic control method or a vehicle guidance assistance method and to a driving assistance system, a vehicle or traffic control system or to a vehicle guidance assistance system, preferably adapted for passive or active vehicle safety as well as software for implementing the relevant system or method.

BACKGROUND OF THE INVENTION

Document WO 2006/021813 A1 describes a method for avoiding a collision and a collision avoidance system for a host vehicle comprising detecting means adapted to detect an intruder vehicle within a predetermined region around the host vehicle and collect data on the intruder vehicle; means for predicting a projected path of the intruder vehicle in the host vehicle reference frame; means for determining a protection region around the host vehicle, and conflict determining means adapted to determine if the intruder vehicle projected path will intercept the host vehicle protection region and thereby determine if conflicts exists between the host vehicle and the intruder vehicle.

US 2008/0309468 describes a system that facilitates collision warning. During operation, the system receives information on one or more predicted collisions and determines a utility of issuing a warning for a predicted collision based on the received information.

Document US2008309468 A1 is considered as the closest prior art and shows a driving assistance method comprising:

a) probabilistically estimating actual and/or future behavior of people and/or a driving system driving a first traffic participant and of a second traffic object or second traffic participant, respectively, the second traffic object or second traffic participant being different from the first traffic participant,

b) probabilistically estimating a trajectory to be taken by the first traffic participant and/or a trajectory to be taken by the second traffic object or second traffic participant,

c) determining risk of collision of the first traffic participant relative to the second traffic object or second traffic participant by calculating information adapted for risk assessment of collision of the first traffic participant relative to the second traffic object or second traffic participant, based on a combination of said probabilistic behavior estimation with said probabilistic trajectory information,

d) outputting the information provided after step a), step b) and/or step c).

Commercially available crash warning systems are mostly aimed at preventing front, rear, or side collisions. Such crash warning systems are usually equipped with radar based sensors on the front, rear or sides adapted for measuring the velocity and distance to obstacles, such as other traffic participants. The algorithms used for determining the risk of collision for such systems are based on variants of time-to-collision, TTC for short. TTC is basically a function of two objects, giving the time remaining before an object enters into collision with the other assuming that the two objects maintain the same linear velocity.

Current commercial systems work reasonably on automotive highways or certain sections of the city where roads are straight. However, it might be misleading in situations where the roads are curved and thus the assumption that motion is linear does not hold. In such situations, the collision risk tends to be under estimated. Furthermore, instances of roads which are not straight can be commonly found in urban environments, like the roundabout or cross junctions.

Existing collision warning systems do not take into account the behavior of vehicles or traffic participants, respectively, and/or of different obstacles which have direct consequences on estimating the future motion of a vehicle.

Collision avoidance schemes can fail for certain types of vehicles and collisions. For example when an automobile loses traction while cornering at high speed on a tree-lined road, the time from the loss of traction to impact with a tree can be so short that no avoidance is possible. Hence, an alternative to collision avoidance has been a need for a long time.

SUMMARY OF THE INVENTION

The object of the present invention is to provide an alternative driving assistance method or vehicle or traffic control method or vehicle guidance assistance method and a driving assistance system or a vehicle or traffic control system or a vehicle guidance assistance system, preferably adapted for passive or active vehicle safety as well as software for implementing the system or method.

This object is achieved by the subject matter of the independent claims. Preferred embodiments are defined in the sub claims.

An aspect of the present invention is the provision of a possibility to determine a probability value which indicates the possibility that a vehicle or any other traffic participant might enter into collision within a certain time in the future in conjunction with taking into account environmental conditions and/or to monitor the vehicle behavior in the past and to assess risk taking characteristics of the driving for a time period in the past, e.g. to asses the possibility that a traffic participant might have entered into collision within a certain time period in the past.

According to a first aspect of the invention, this object is achieved by a driving assistance method according to claim 1.

Step c) may include weighting factors. For example, step c) may include assessing the risk based on a likely collision energy, whereby, for example, collisions of high energy 15 are given a higher weighting for risk than collisions with a low collision energy.

Optionally the method may include a further step d): outputting second information derived from information provided after step a), step b) and/or step c).

This outputting step d) may include one of a variety of actions, including:

i) storing the second information and optionally information provided after step a), step b) and/or step c), e.g. in a black box.

ii) providing feedback to the driver, pilot, captain or operator of the first traffic participant of the second information or information derived from step a), step b) and/or step c). The feedback could comprise a warning or another type of message

iii) broadcasting the second information or information derived from step a), step b) and/or step c) to others including other traffic participants

iv) issuing a warning or alarm, e.g. displaying an alarm, sounding an alarm, issuing a tactile alarm, to the driver, pilot, captain or operator of the first traffic participant or to other persons

v) issuing a statement regarding a period of driving, e.g. a verbal reference to, or a visual display of, a cumulated risk assessment for the behaviour of the first traffic participant over a time period such as the last 30 minutes.

According to a preferred embodiment of the invention, the method comprises the step of displaying the information as a signal which is indicative for the risk of collision and/or indicative of safe driving, i.e. low risk of collision driving.

Optionally the method may include a further step d) or a further step e): controlling the behavior of the first traffic participant based on information provided after step a), step b) and/or step c). The controlling may include autonomously carrying out a predetermined accident avoidance action.

Accordingly, the method comprises the step of performing a predetermined action based on the information provided after step a), step b) and/or step c). For example, the predetermined action can comprise turning off cruise control and/or applying brakes or reverse thrust; or providing an alarm, e.g. an auditory, visual, or tactile alarm, or altering the gain of servocontrollers for the brakes or steering, operating cameras to record events, sealing off or locking compartments such as luggage compartments, activating emergency lighting, activation of pre-crash systems such as tightening safety belts to take up slack, inflating airbags, tilting seats, changing the position of headrests, unlocking safety doors or windows, filling compartments with foam, filling the spare space in fuel tanks with a non-inflammable or inert gas, etc.

According to a preferred embodiment of the invention, the method comprises the step of performing a geometrical transformation for an adaptation of a Gaussian Process, GP for short. Preferably, the geometrical transformation comprises Least Squares Conformal Mapping, LSCM for short. Preferably, the method comprises the step of measuring trajectory, speed, steering, forward and/or lateral acceleration of the first traffic participant and/or second traffic participant. Preferably, the method comprises the step of detecting traffic lights and/or traffic sings.

According to a preferred embodiment of the invention, the method comprises the step of detecting and/or tracking of a position and/or orientation of the first and/or second traffic object or traffic participant. Preferably, the method comprises the step of measuring weather data which comprises temperature, pressure, rain speed and/or wind speed. Preferably, the method comprises the step of applying a Hidden Markov Model and/or a variant of the Hidden Markov Model.

Optionally, the method includes the step of retrieving historical data concerning the riskiness of geographical locations, e.g. whether a crossroads immediately ahead is a well known dangerous crossroads, whether there is shallow water which is a danger for shipping, or a reef, i.e. generally whether or not there are known dangerous locations in the vicinity based on historical accident data.

According to a second aspect of the invention, above mentioned object is achieved by a vehicle guidance assistance system according to claim 11.

The behavior estimator may be further adapted for estimating a plurality of possible trajectories to be taken by the first traffic participant and/or trajectories to be taken by the second traffic object or second traffic participant. The risk estimator may be adapted for determining risk of collision of the first traffic participant relative to the second traffic object or second traffic participant for each of the plurality of trajectories by calculating information, which comprises an output probability value, adapted for risk assessment of collision of the first traffic participant relative to the second traffic object or second traffic participant.

Optionally a behavior realizing unit may be provided that is adapted for controlling the behavior of the first traffic participant based on the information provided by the risk estimator and/or by the behavior estimator.
According to a preferred embodiment of the invention, a display is provided and adapted for displaying the information as a signal which is indicative for a risk of collision and/or indicative of safe driving, i.e. low risk of collision driving. Preferably, the signal comprises an audio signal, a visual signal and/or a tactile signal.

According to a preferred embodiment of the invention, a user and/or a control unit performs a predetermined action based on the information provided by the risk estimator and/or the behavior estimator. Preferably, the behaviour estimator and/or the behaviour realizing unit is adapted for performing a geometrical transformation for an adaptation of a Gaussion Process (GP). Preferably, the geometrical transformation comprises LSCM.

According to a preferred embodiment of the invention, the system comprises a first sensor which is adapted for measuring trajectory, speed, steering, forward and/or lateral acceleration of the first and/or second traffic object or second traffic participant. Preferably, the first sensor comprises a light indicator and is further adapted for detecting traffic lights and/or traffic signs.

According to a preferred embodiment of the invention, the system comprises a target tracker adapted for detecting and/or tracking of a position and/or orientation of the first and/or second traffic object or second traffic participant. Preferably, the system further comprises a second sensor adapted for measuring weather data comprising temperature, pressure, rain speed and/or wind speed. Preferably, the behavior estimator comprises a recognition unit with code means adapted for applying a Hidden Markov Model and/or a variant of the Hidden Markov Model, HMM for short.

It is an aspect of the present invention to provide a possibility for vehicle or traffic control adapted for passive or active vehicle safety for vehicles, such as cars, ships and/or aircraft, and/or adapted for driving assistance. Preferably, evaluation of the risk of collision of a predetermined first vehicle or first traffic participant, respectively, relative to a second vehicle or second traffic participant is performed. The concerned first vehicle or concerned first traffic participant, respectively, is preferably located with respect to a potential stationary and/or moving second traffic participant and/or obstacle preferably located in its environment.

It is an idea of the invention to evaluate the risk of collision preferably based on an appropriate combination of a probabilistic estimation of actual and/or future behaviors of involved traffic participants with a probabilistic estimation of their trajectories to be taken, as well as taking into account other traffic objects such as parked cars, solid objects such as trees, curb stones, telephone boxes, lamp posts, central reservations, bollards, etc. all of which can be involved in an accident. Preferably, the risk of collision is continuously evaluated in the vehicular environment, such as a road and urban traffic environments, preferably taking into account certain factors, such as the geometry of the traffic environment, for instance of roads, flight paths, taxiing and/or take-off runways, ground plan of an airport, water channels, docks, the estimated behaviors of other vehicles and/or other traffic participants, and/or an uncertainty factor related to the involved real world data, wherein the term "real world data" refers to data adapted for characterizing the properties of the "real world". Such data includes weather data, wind speeds, road conditions, presence of fog, ice conditions, rainfall, night darkness, etc.

Preferably, the risk of collision for a certain vehicle or traffic participant is continuously evaluated. This vehicle or traffic participant is also called the "ego-vehicle" or "ego-traffic participant", respectively, with respect to all other traffic participants in the scene.

The term "vehicle" should be construed broadly to include ships, boats, aircraft, hovercraft, robots, automobiles, vans, trucks, e.g. objects adapted for locomotion such as wheel or tracked vehicles, missiles, etc. The invention is particularly applicable to road vehicles including autonomous vehicles which preferably provide unmanned and/or remotely controlled ground vehicles. The interest for automotive industries is to produce safer and/or more user friendly cars. A common reason behind most traffic accidents is a failure on the part of the driver to adequately monitor the vehicle's surroundings and/or consequently make the correct decision. This failure may depend upon time of day, road conditions, weather conditions, lack of sleep, etc. An "in vehicle system" capable of indicating present performance, warning and/or intervening with appropriate actions can potentially reduce a large number of accidents. Therefore, the invention preferably serves as a "driving assistance system" or "vehicle guidance assistance system" adapted for indicating present performance, or warning the driving system of unmanned vehicles, or drivers or operators of manned or unmanned and/or remotely controlled ground vehicles of potential collisions and/or for activating an operation which is designed to increase safety such as indicating the urgency for braking or for initiating braking. Preferably, the invention can be an integral part of "autonomous vehicles" wherein the autonomous vehicle requires making a control decision which preferably minimizes risk of collision. In a preferred embodiment the present invention provides a "driving assistance system" adapted to provide feedback to an operator, driver, captain, pilot of the first traffic participant, this feedback giving an indication of the behavior of the first traffic participant in the traffic, e.g. the level of collision risk over a period of time such as 30 minutes in the past. Accordingly, in some embodiments the calculated probability values preferably indicate the plausibility that an ego-vehicle might have entered into collision within a certain time horizon in the past, wherein the time horizon is preferably within the order of a minutes. The probability value for the risk of collision within the time horizon preferably is calculated by solving two sub-problems.

The first sub-problem is that of estimating the probability that a vehicle has executed a certain behavior in the past based on observations, such as the distance of the vehicle to its border, and any information obtainable from a vehicle which provides an indication as to the behavior. According to a preferred embodiment of the invention, a variant of the HMM is adapted for estimating a probability distribution over behaviors for each vehicle. The second sub-problem preferably provides a probabilistic distribution adapted for expressing the trajectory execution of a vehicle for each possible behavior of the same vehicle. The trajectories are then analysed to determine the risk of collision. Thus the riskiness of the behavior can be assessed for a time period within the time horizon. This assessment of the riskiness of the behavior is preferably communicated to the driver, operator, pilot or captain of the first traffic vehicle in a positive way, i.e. emphasising how risk-free the vehicle has been driven.

In some embodiments, the calculated probability value preferably indicates the plausibility that an ego-vehicle might enter into collision within a certain time horizon in the future, wherein the time horizon is preferably within the order of a few seconds. It is noted that the probability value for the risk of collision within the time horizon, preferably the next few seconds, preferably is calculated also by solving two sub-problems.

The first sub-problem is that of estimating the probability that a vehicle is executing a certain behavior based on observations, such as the distance of the vehicle to its border, and any information obtainable from a vehicle which provides an indication as to future behavior of which the turning indicator lights of the vehicles are only one embodiment. According to a preferred embodiment of the invention, a variant of the HMM is adapted for estimating a probability distribution over behaviors for each vehicle. The second sub-problem preferably provides a probabilistic distribution adapted for expressing the trajectory execution of a vehicle for each possible behavior of the same vehicle. The trajectories are then analyzed to determine the risk of collision. According to a preferred embodiment of the invention, the probabilistic representation of the trajectory execution of a vehicle is provided as Gaussian distribution. Processes governed by this probabilistic representation are referred to as Gaussian Processes (GP), e.g. the evaluation of possible trajectory executions of a vehicle can be represented as a GP.

According to a preferred embodiment of the invention, the adaptation of a GP to the geometry of the road is enabled, preferably taking into account the curvature and/or turns in intersection.

According to another preferred embodiment of the invention, a discretized conformal method is used which is adapted for performing this adaptation.

It is worth noting that the invention preferably takes into account environmental structures and/or constraints, hence, it preferably takes into account the non-linear aspects of predicting motion. Preferably, a generalization of collision risk where a variety of different risk factors with different meanings can be easily computed is provided. Such values are e.g. useful for human interpretation, especially when Human Machine Interfaces are involved. The behaviors of vehicles which have direct consequences on estimating their future motion are preferably taken into account. Therefore, the invention is able to provide an accurate estimation of risk of collision which preferably leads to safer systems.

BRIEF DESCRIPTION OF THE DRAWINGS

These and other aspects of the invention will be apparent from and elucidated with reference to the embodiments described hereinafter.

In the drawings:

Fig. 1 shows an architecture overview of a vehicle or traffic control system according to a preferred embodiment of the invention;

Fig. 2 shows driving behavior recognition according to a preferred embodiment of the invention;

Fig. 3 illustrates a Gaussian Process for a straight road according to a preferred embodiment of the invention;

Fig. 4 shows a Gaussian Process for a curved road according to a preferred embodiment of the invention;

Fig. 5 illustrates mapping of curved Gaussian Process on the canonical Gaussian Process according to a preferred embodiment of the invention; and

Fig. 6    illustrates mapping of observations into the canonical space according to a preferred embodiment of the invention.

Fig. 7    is a schematic representation of a processing system that can be used with the present invention.

DETAILED DESCRIPTION OF EMBODIMENTS

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. Where the term "comprising" is used in the present description and claims, it does not exclude other elements or steps. Where an indefinite or definite article is used when referring to a singular noun e.g. "a" or "an", "the", this includes a plural of that noun unless something else is specifically stated.

The term "comprising", used in the claims, should not be interpreted as being restricted to the means listed thereafter; it does not exclude other elements or steps. Thus, the scope of the expression "a device comprising means A and B" should not be limited to devices consisting only of components A and B. It means that with respect to the present invention, the only relevant components of the device are A and B.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

The term "collision" should be interpreted broadly. It includes not only that one vehicle physically touches another but also that a second vehicle comes within a protective zone located around a first vehicle. Hence the term "collision" should be interpreted with reference to vehicles that optionally are to be surrounded by safety or protection zones. An example is an aircraft where flying close to another aircraft without touching may still affect the other aircraft due to tail and wing vortices.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

The invention will now be described by a detailed description of several embodiments of the invention. It is clear that other embodiments of the invention can be configured according to the knowledge of persons skilled in the art without departing from the technical teaching of the invention, the invention being limited only by the terms of the appended claims.

One aspect of the present invention is based on improving a collision avoidance scheme.

Another aspect of the present invention is based on the observation that collision avoidance alone is not able to reduce serious accidents in some circumstances. When the time between realizing that an accident will happen and the actual impact is very short or when the options for avoidance are limited or non-existent, collision avoidance is not successful. Hence the present invention proposes for us in any embodiment accident prevention either alone or in combination with collision avoidance. Accident prevention involves training or motivating drivers or operators of vehicles to practice low-risk behavior. This is best achieved by reinforcing or positive feedback, i.e. messages report low risk behavior positively rather than only reporting when dangerous situations are likely to occur, i.e. rather than only reporting negative potential situations.

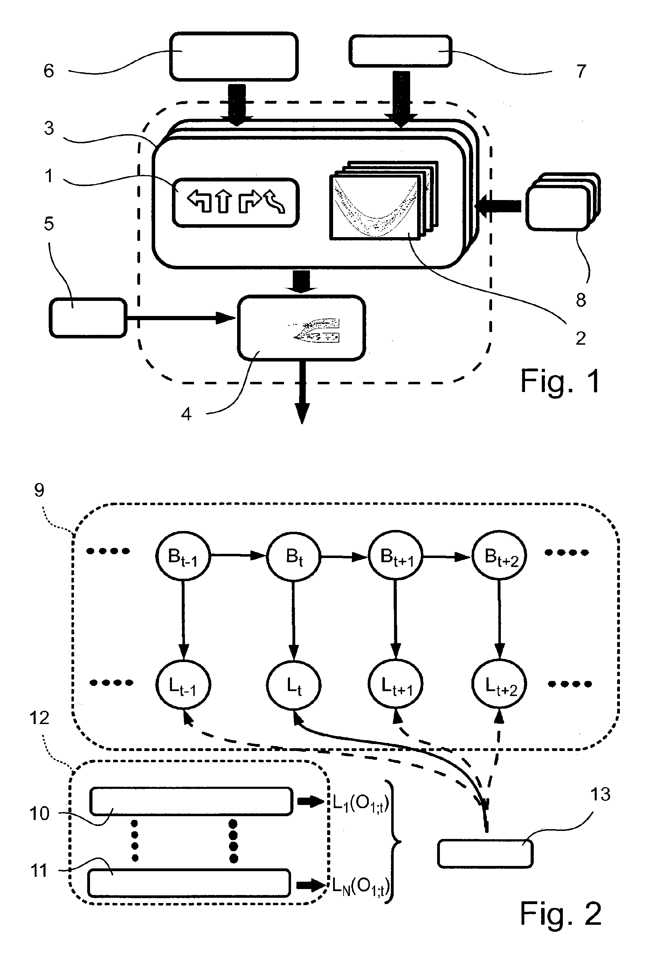

Fig. 1 shows an architecture overview of a driving assistance or vehicle or traffic control system or a vehicle guidance assistance system according to a preferred embodiment of the invention. The driving assistance or vehicle or traffic control system or a vehicle guidance assistance system preferably evaluates risk of collision and comprises a behavior estimator 1 adapted for estimating actual and/or future behavior of a first traffic participant and of an object such as of a second traffic participant, respectively, wherein the behavior estimator 1 is further adapted for estimating a trajectory to be taken by the first traffic participant and a trajectory to be taken by the object, e.g. the second traffic participant. A risk estimator 4 is adapted for determining risk of collision of the first traffic participant relative to the object, e.g. second traffic participant by calculating information, which comprises an output probability value, adapted for risk assessment of collision of the first traffic participant relative to the object, e.g. second traffic participant. The information gained by these estimators may be made available to the driver (or captain, pilot etc.) or to the driving system of an unmanned vehicle or to the operator of a remotely controlled vehicle in any suitable manner. Alternatively or additionally, the information may be stored, e.g. on any suitable storage medium such as in a "black box". The behavior estimator 1 or the risk estimator 4 need not be located or only located in the vehicle. If the vehicle is a remotely controlled vehicle at least part of the estimator 1 or 4 may be located at a remote location where the operator of the vehicle is located for example.

Optionally, a behavior realizing unit 2 can be provided that is adapted for assessing the risk of, and/or optionally for controlling, the behavior of the first traffic participant based on the information provided by the risk estimator 4 and by the behavior estimator 1. The behavior estimator 1 and the behavior realizing unit 2 can include a probabilistic vehicle evolution unit 3. The behavior realizing unit 2 need not be located or only located in the vehicle. If the vehicle is a remotely controlled vehicle at least part of the behavior realizing unit 2 may be located at a remote location where the operator of the vehicle is located for example.

The architecture preferably comprises three components: a behavior estimator 1, a behavior realizing unit 2 and a risk estimator 4. The behavior estimator 1 comprises a recognition unit with code means adapted for applying an HMM. The recognition unit is adapted for estimating the probability that a vehicle is executing a predetermined behavior. According to a preferred embodiment invention for example, it gives a probability value P(turn left) or P(turn right) which represents the probability that the vehicle observed will perform a turn left or turn right maneuver, respectively.

The behavior realizing unit 2 evaluates the risk of collision, preferably by performing a geometric evaluation. The realization can be represented as a GP, a Gaussian Process, which is a probabilistic representation of the possible future evolutions of a vehicle given its behavior. The adaptation of the GP according to the behavior is performed using a geometrical transformation known as LCSM. To sum up, driving behavior recognition and driving behavior realization preferably form a probabilistic model for the future evolution of a vehicle or traffic participant, respectively.

An evaluation of risk is given by a probabilistic model of the possible future evolution of a vehicle, preferably by the probability distribution over behaviors from driving behavior recognition and/or driving behavior realization. A value for the risk of collision can be calculated based on this probabilistic model. This value of risk can be communicated to the driver or operator of the vehicle, e.g. through a display, through auditory or tactile communicators or by any other means. Also the risk values over a period of time can be collected and stored, e.g. in a suitable memory, and a representative risk behavior can be communicated to the driver or operator after elapse of a time period, e.g. 30 minutes. This is preferably done in such a way that the reporting to the driver or operator is positive for low-risk behavior. In this way the driver or operator is motivated to maintain low-risk behavior but is, if necessary, warned of risky behavior.

An input to the model is the ego-vehicle trajectory 5, indicated in Fig. 1, which is obtained by odometry using vehicle sensors for speed, steering, forward and/or lateral acceleration, potentially combined with ego-motion estimation from the optical flow in the camera image, possibly also by gyros and/or accelerometers adapted for determining position, velocity and so on. Another input is a target tracker 8, which preferably serves for detection and/or tracking of all objects that might be involved in an accident, e.g. the tracking of pedestrians, or other vehicles' position and/or orientation in a range of, for instance, about 100 m according to a preferred embodiment of the invention. This is preferably obtained by single and/or stereo cameras, potentially combined with radar and/or lidar. Another input parameter is road geometry 7 which can be obtained by a suitable map, such as a Global Positioning System map, GPS map for short, as well as from the input of additional sensors 6 and/or analysis of images from cameras used for instance for lane detection. Such additional sensors 6, e.g. light indicators, traffic lights and/or traffic signs detectors are preferably used. Simultaneous localization and mapping (SLAM) may also be used as a means of obtaining the road geometry and the vehicle position.

A further input parameter to the model preferably comprises road conditions, such as wind, ice snow, fog, rain, presence of water, such as might induce aquaplaning, and so on, which can change the dangerousness of a situation. So parameters like temperature can be measured as well as other weather data, such as pressure, rain, for instance windscreen wipers that are operating, rain water measuring device on the car, wind speed measurements and/or radio ice warnings, visibility e.g. reduced due to fog or night darkness. Detectors can be used for rain, ice, fog, wind speed and so on. Also mechanical imitations have to be taken into account which put some constraints on the mechanics, for instance cars do not fly, things keep going in a straight line unless there is evidence to the contrary, ships stay on the sea and do not travel onto land and so on. Moreover, traffic regulations can be considered as well. GPS maps can be augmented with traffic regulation information, such as speed limits, one way streets and so on. Hence, this information can be included in the analysis as well. According to the preferred embodiment of the invention, the methods according to embodiments of the present invention are sensor agnostic and/or are also robust to inaccurate or incomplete sensor readings.

Accordingly another input to the HMM for behavior recognition purpose is the way people drive being altered by rain / fog / ice / etc. and it is necessary to take those factors into consideration when understanding the behavior, e.g. slowing down might be recognized as the first step before turning on dry road, but on icy road the same assumption probably does not hold.

Another method of allowing for such conditions is to control the parameters of the GP since, for instance, in case of rain or ice, tire grip is reduced which will modify the range of possible trajectories for the vehicles.

Another input can be historical data concerning increase risk associated geographical locations, e.g. whether a crossroads immediately ahead is a well known dangerous crossroads, whether there is shallow water which is a danger for shipping, or a reef, i.e. generally whether or not there are known dangerous locations in the vicinity based on historical accident data.

Fig. 2 schematically shows driving behavior recognition according to a preferred embodiment of the invention. Behavior recognition is based on a variant of the HMM. The behavior is modeled in two layers: the upper layer HMM 9 and the lower layer HMM 12. Each layer comprises at least one HMM. The upper layer HMM 9 comprises a single HMM where its hidden state represents behaviors at a high level, such as overtaking, turning left, turning right and/or going straight. For each hidden state and/or behavior in the upper layer HMM 9, there is a corresponding HMM in the lower layer HMM 12 which represents a sequence of finer state transitions of a single behavior. The lower layer HMM 12 comprises behaviors, such as an HMM behavior 1, indicated as reference numeral 10, up to an HMM behavior N, indicated as reference numeral 11 in Fig. 2, wherein a vector of $L_t$ for each time step 13 is also indicated in Fig. 2.

Each HMM in the lower layer HMM 12, indexed by h, updates its current state based on HMM state estimation:

$$P(S_{t,h}O_{1:t}) \propto P(O_t|S_{t,h}) \sum_{S_{t-1,h}} P(S_{t-1,h})P(S_{t,h}|S_{t-1,h})$$

where the variable $O_t$ corresponds to observations at time t and $S_{t,h}$ is a variable for the hidden state of the HMM h at time t.

For each HMM h in the lower layer HMM 12, its observation likelihood, $L_h(O1:t)$, can be computed by:

$$L_h(O_{1:t}) = \sum_{S_{t,h}} P(S_{t,h}O_{1:t})$$

Each of the observation likelihoods $L_h(O1:t)$ are the "observations" for the HMM of the upper layer. The interference of the upper level behavior takes a similar form:

$$P(B_t|O_{1:t}) = P(O_{1:t}|B_t) \sum_{B_{t-1}} P(B_{t-1})P(B_t|B_{t-1})$$

$$= L_{B_t}(O_{1:t}) \sum_{B_{t-1}} P(B_{t-1})P(B_t|B_{t-1})$$

where Bt is a hidden state variable of the upper level HMM at time t. P(Bt|Bt1) is the upper level behavior transition matrix.

There are preferably two different transition matrices for the high level behavior. One transition matrix corresponds to the behavior transition, when the lower level behaviors are completely performed: $T_{final}$. Another transition matrix $T_{not\text{-}final}$ corresponds to the second case where lower level behaviors are not completely performed. The higher level behavior transition matrix can be calculated as a function of a lower level state:

$$P(B_t|B_{t-1}) = \sum_{S_{t,B_{t-1}}} P(S_{t,B_{t-1}}) P(B_t|S_{t,B_{t-1}}, B_{t-1})$$

where St,Bt-1 is the state at time t of the HMM at the lower level corresponding to the previous behavior Bt-1. B(Bt|St, Bt-1, Bt-1) is by definition:

$$P(B_t|S_{t,B_{t-1}} B_{t-1}) = \begin{cases} T_{final} & S_{t,B_{t-1}} \text{ is a final state} \\ T_{not-final} & \text{otherwise} \end{cases}$$

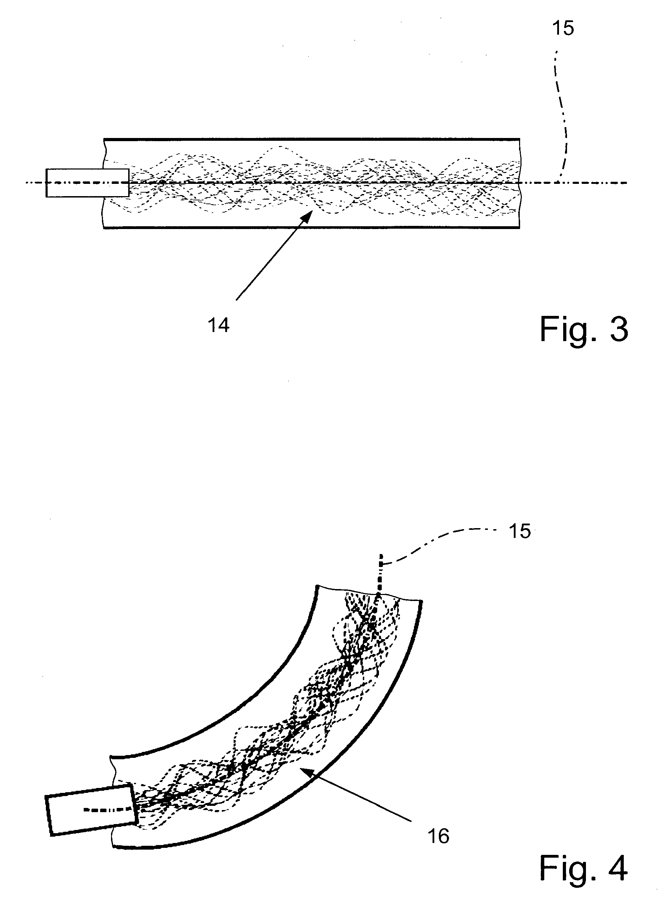

Fig. 3 illustrates a GP for a straight road according to a preferred embodiment of the invention. The GP represents the normal driving routine where a driver approximately follows the lane and does not drift too far to the left and/or to the right, respectively. On a straight road, as illustrated in Fig. 3, this can be represented with a GP where the mean 14 of the GP corresponds to the middle of the lane 15.

A canonical GP corresponds to Fig. 3, where it is the GP corresponding to a vehicle travelling along a perfect straight stretch of road. The canonical GP preferably serves as a basis from which it will be deformed to fit the geometry of the road as required.

Fig. 4 shows the GP for a curved road according to a preferred embodiment of the invention. When non-linear situations are encountered, a deformation will be performed on the canonical GP to fit the geometry of the lane. Such an embodiment is illustrated in Fig. 4, where the lane has a non-zero curvature showing a lane turning left. The middle of the lane 15 is also shown as well as the mean value of the GP, variance and samples 16 corresponding to turning left.

The process of deformation is performed using LSCM. LSCM performs a discretized conformal mapping to achieve the deformation. The conformal mapping preferably minimizes distortion at the local level.

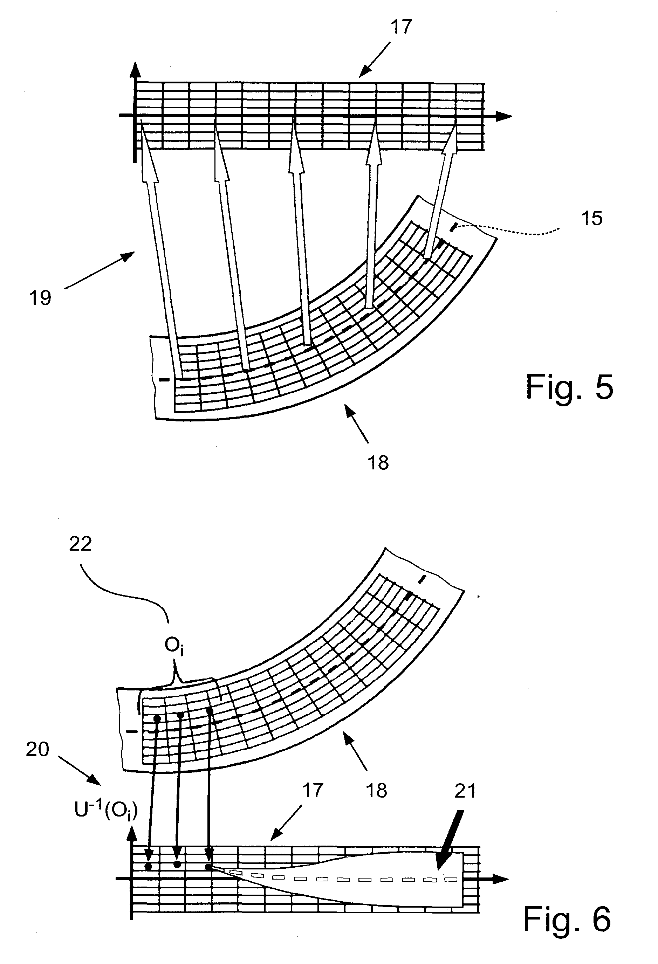

Fig. 5 shows mapping of a curved GP on the canonical GP according to a preferred embodiment of the invention. The mapping preferably requires the specification of a certain number of fixed points and/or their mapped coordinates. The fixed points are preferably deterministically chosen: A discretized set of points lying along the middle of the lane 15, each corresponding to a point along the horizontal axis of the canonical GP frame as shown in Fig. 5. The distance between consecutive points is preferably constant. The canonical space 17 and the world space 18 are also depicted in Fig. 5. Points along the middle of the lane 15 are fixed to the horizontal axis which is indicated as reference numeral 19 in Fig. 5.

Predicting a vehicle motion is preferably performed in at least two steps: Firstly, the positional observations of vehicles are mapped into the canonical space 17 via LSCM. Secondly, the prediction using the GP in canonical space 17 is then performed. Finally, but optionally, the probability distribution over prediction in canonical space 17 is mapped back to original space using the inverse first step. However, the last step is preferably optional, i.e. one might determine everything in canonical space 17.

The observations in world coordinates have preferably to be mapped to canonical space 17 before inference on future motion can be performed. LSCM gives the discrete piecewise affine mapping between both spaces: The world space 18 and the canonical space 17 are indicated in Fig. 6 which illustrates a preferred embodiment of the invention. Mapping of observations 22 into the canonical space 17 is shown. Observations $O_i$ 22 in world coordinates can be mapped to canonical space via a transformation $U^{-1}(O_i)$, indicated as reference numeral 20 in Fig. 6, where each $O_i$ is a positional observation. The mapping 20 to canonical space 17 is preferably discretized and/or manifest in the form of a mesh. $U^{-1}(O_i)$ is preferably calculated by a first location of the mesh triangle which contains $O_i$ in the world space mesh, and then transformed back to the corresponding mesh triangle in canonical space 17 by calculating the corresponding barycentric coordinates. Path prediction comprising mean and variants values for the GP 21 are also shown in Fig. 6.

The mapping of the past n observations of vehicle positions in world coordinates gives a set of values {(xi, yi)}, i = 1 ... n in canonical space. The probability distribution over future motion of the observed vehicle thus corresponds to the probability distribution given by the GP distribution:

$$
\begin{aligned}
P(Y_*|X_*, X, Y) &= \mathcal{GP}(\mu_{Y_*}, \Sigma_{Y_*}) \\
\mu_{Y_*} &= K(X_*, X)\left[K(X, X) + \sigma^2 \mathbf{I}\right]^{-1} Y \\
\Sigma_{Y_*} &= K(X_*, X_*) - K(X_*, X)\left[K(X, X) + \sigma^2 \mathbf{I}\right]^{-1} K(X, X_*)
\end{aligned}
$$

where X and Y are the vectors of the observations in canonical space 17 projected down to the x-axis and to the y-axis, respectively. X* is a vector of x-axis coordinates for which the motion is preferably predicted. K(X, X*) is the covariance matrix of the GP distribution, where each entry of the matrix preferably denotes covariance of point x against another point x'. The entry is parametrised with the following function:

$$
k(x, x') = \theta_1^2 \exp\left(-\frac{(x - x')^2}{2\theta_2^2}\right)
$$

The inverse mapping of the prediction from canonical space 17 back to original space is preferably done by inverting the process of the last step describe above.

According to a preferred embodiment of the invention, collision risk is evaluated by considering a trajectory. In a scene, there might be several vehicles present. Considering the case of only one vehicle present, vehicle V1, excluding autonomous vehicle VA, the risk of a trajectory considered by VA, trajectory TA, against behavior b of vehicle V1 is given by:

$$
P(C|T_A\, B_{V_1}\, V_1) = \sum_{T_{V_1}} P(C|T_A\, T_{V_1}\, B_{V_1}\, V_1) P(T_{V_1}|B_{V_1}\, V_1)
$$

where C is a probabilistic Boolean variable indicating if there is a collision, BV1 is the variable corresponding to the behaviors for vehicle V1, described by the hidden states of the upper layer HMM. TA and TV1 are the trajectories of VA and V1, respectively. P(TV1/BV1 V1) is the physical realization of behavior BV1 and thus is represented by the trajectories sampled from the GP. P(C|TA TV 1 BV1 V1) evaluates where there is a collision between trajectories TA and TV1.

Based on the velocity an acceleration of VA and V1, the positions along trajectories TA and Ti, respectively, can be easily calculated by linear interpolation along the list of positions describing TA and Ti. These positions are calculated in discrete time stamps and at each time step, a collision detection is performed.

According to a preferred embodiment of the invention, an algorithm is used for computing P(C | TA BV1 V1):

```
Input: Trajectory T_A for vehicle V_A
Output: P(C|T_A B_Vi V_i)
1  ColCount = 0.0;
2  foreach Sampled path T_Vi ~ P(T_Vi|B_Vi V_i) do
3      foreach Discretized time step t = step * Δt do
4          X_A = Position of V_A at time t along polyline T_A;
5          X_i = Position of V_i at time t along polyline T_Vi;
6          Θ_A = Orientation of line segment of T_A containing X_A;
7          Θ_i = Orientation of line segment of T_Vi containing X_i;
8          R_A = Rectangle centered at X_A and angle Θ_A;
9          R_i = Rectangle centered at X_i and angle Θ_i;
10         if Separating axis exist between R_A and R_i then
11             ColCount = ColCount + 1.0;
12         end
13     end
14 end
15 return ColCount / Number of Samples Paths;
```

The risk of a trajectory that collides against another vehicle or comes within its protective zone is preferably obtained by aggregating the previously calculated risk preferably against a behavior of another vehicle. The aggregation is essentially a weighted sum of P(C|T_A B_vi V_i) for each behavior B_vi of vehicle V_i:

$$P(C|T_A V_i) = \sum_{B_{V_i}} P(C|T_A B_{V_i} V_i) P(B_{V_i}|V_i)$$

The weighted sum is preferably performed against the term $P(B_{vi}|V_i)$ and its values preferably come directly from the layered HMM.

In an additional embodiment other weighting factors may be included, for example, assessing the risk can be based on a likely collision energy, whereby, for example, collisions of high energy are given a higher weighting for risk than collisions with a low collision energy.

In the above embodiments reference has been made to collision risk evaluation by considering a trajectory The present invention includes methods for obtaining multiple TA trajectories and using these in the risk assessment. For example, a plurality of possible trajectories can be determined and a Monte Carlo sampling based on a mean trajectory and speed can be carried out. Multiple TA trajectories can be evaluated in order to build a different/more complete collision risk probability.

The evaluated collision risk can be stored regularly at discrete time intervals, e.g. in a memory that can be part of a "black box" or on-vehicle recorder. This evaluated collision risk can be reported for a time period in the past, e.g. for the last 30 minutes. The reporting may be by means of a display, e.g. a head-up display or an LCD display in the vehicle, by an audible report or by any other means. This report can contribute to accident prevention as it is intended to motivate the driver or operator of the vehicle to maintain low-risk behavior without impairing collision avoidance behavior as this remains in place.

According to a preferred embodiment of the invention, possible actions can be that one output comprises a risk assessment that is shown by a predetermined means, for instance an audio means, where a change in audio frequency with risk is determined, i.e. a higher frequency corresponds to a higher risk, or visual means, such as in a vehicle display, and/or a tactile means, which preferably makes use of vibration of steering wheel and/or of vibration of driver/pilot seat. Another output could be an alarm, for instance blowing a horn, flashing lights and so on. However, alarms and displays are not reasonably effective because they usually come quite late. Preferably, one output is to change an operating/driving setting of the vehicle, such as turning off cruise control, autopilot etc. and go back to manual, applying the brakes, for instance in a car or in a taxiing aircraft and/or for ship reverse thrust, or changing the gains on the brake servers such that the brakes come on harder and/or faster than normal but still require human activation. Other examples are changing the gains on the steering servers such that steering becomes more sensitive to a movement of the steering mechanism than normal but still require human activation. Still other examples are avoidance manoeuvres, such as turning the steering wheel, operating joystick/radar pedals on an aircraft and/or turning rudder on a ship which represents a dangerous maneuver. Another dangerous maneuver is operating the ejection seat.

The vehicle or traffic control method or vehicle guidance assistance method or the vehicle or traffic control system or vehicle guidance assistance system, can be implemented in hardware circuits, and/or some parts can be implemented in software in any computer language, run by conventional processing hardware such as a general purpose microprocessor, or application specific integrated circuits for example.

For example, the vehicle or traffic control method or vehicle guidance assistance method or the vehicle or traffic control system or vehicle guidance assistance system, may be implemented as a controller according to embodiments of the present invention that may be implemented as hardware, computer software, or combinations of both. The controller may include a general purpose processor, an embedded processor, an application specific integrated circuit (ASIC), a field programmable gate array (FPGA) or other programmable logic device, discrete gate or transistor logic, discrete hardware components, or any combination designed to perform the functions described herein. A processor may also be implemented as a combination of computing devices, e.g., a combination of an FPGA and a microprocessor, a plurality of microprocessors, one or more microprocessors in conjunction with an FPGA, or any other such configuration.

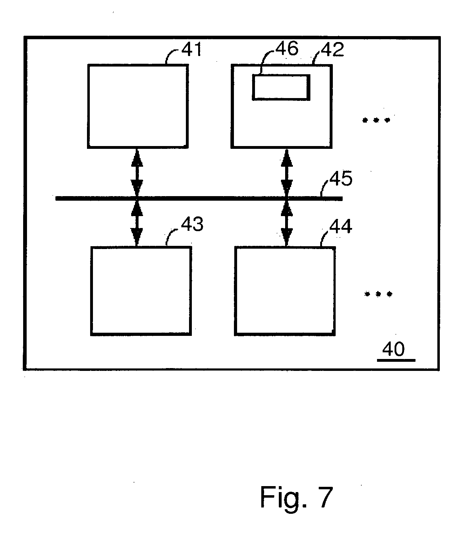

The present invention may also be realized on a processor system. The processing system may include a computing device or processing engine, e.g. a microprocessor. Any of the methods described above according to embodiments of the present invention or claimed may be implemented in a processing system 40 such as shown in Fig. 7. Fig. 7 shows one configuration of processing system 40 that includes at least one customizable or programmable processor 41 coupled to a memory subsystem 42 that includes at least one form of memory, e.g., RAM, ROM, and so forth. It is to be noted that the processor 41 or processors may be a general purpose, or a special purpose processor, and may be for inclusion in a device, e.g. a chip that has other components that perform other functions. Thus, one or more aspects of the method according to embodiments of the present invention can be implemented in digital electronic circuitry, or in computer hardware, firmware, software, or in combinations of them. The processing system may include a storage subsystem 43 that has at least one disk drive and/or CD-ROM drive and/or DVD drive. In some implementations, a display system, a keyboard, and a pointing device may be included as part of a user interface subsystem 44 to provide for a user to manually input information, such as parameter values. Ports for inputting and outputting data may be included. More elements such as network connections, interfaces to various devices, and so forth, may be included, but are not illustrated in Fig. 7. The various elements of the processing system 40 may be coupled in various ways, including via a bus subsystem 45 shown in Fig. 7 for simplicity as a single bus, but which will be understood to those in the art to include a system of at least one bus. The memory of the memory subsystem 42 may at some time hold part or all (in either case shown as 46) of a set of instructions that when executed on the processing system 40 implement the steps of the method embodiments described herein.

The present invention also includes a computer program product which provides the functionality of any of the methods according to the present invention when executed on a computing device. Software according to the present invention, when executed on a processing engine, can contain code segments that provide vehicle guidance assistance, e.g. the software is adapted to

a) estimate actual and/or future behavior of a first traffic participant and of a second traffic object, e.g. another vehicle, i.e. a second traffic participant, the second traffic participant being different from the first traffic participant,
b) estimate a trajectory to be taken by the first traffic participant and/or a trajectory to be taken by the second traffic object or participant,
c) determine risk of collision of the first traffic participant relative to the second traffic participant by calculating information adapted for risk assessment of collision of the first traffic participant relative to the second traffic participant, and
d) output the information provided after step a), step b) and/or step c).

The software may be adapted to control the behavior of the first traffic participant based on the information provided after step a), step b) and/or step c).

The software may be arranged to display the information as a signal which is indicative for the risk of collision based on vehicle risk behavior over a time period in the past and/or for the future.

The software may be adapted to allow or initiate the performance of a predetermined action based on the information provided after step a), step b) and/or step c).

The software may be adapted to allow or initiate the performance of a geometrical transformation for an adaptation of a Gaussian process. The geometrical transformation can comprise a Least Squares Conformal Map.

The software may be adapted to measuring trajectory, speed, steering, forward and/or lateral acceleration of the first and/or second traffic participant.

The software may be adapted to detect traffic lights and/or traffic signs.

The software may be adapted to detect and/or track a position and/or orientation of the first and/or second traffic object or participant.

The software may be adapted to control measurement of weather data which comprises temperature, pressure, rain speed and/or wind speed.

The software may be adapted to apply a Hidden Markov Model and/or a variant of the Hidden Markov Model.

Such a computer program product can be tangibly embodied in a carrier medium carrying machine-readable code for execution by a programmable processor. The present invention thus relates to a carrier medium carrying a computer program product that, when executed on computing means, provides instructions for executing any of the methods as described above. The term "carrier medium" refers to any medium that participates in providing instructions to a processor for execution. Such a medium may take many forms, including but not limited to, non-volatile media, and transmission media. Non-volatile media includes, for example, optical or magnetic disks, such as a storage device which is part of mass storage. Common forms of computer readable media include, a CD-ROM, a DVD, a flexible disk or floppy disk, a tape, a memory chip or cartridge or any other medium from which a computer can read. Various forms of computer readable media may be involved in carrying one or more sequences of one or more instructions to a processor for execution. The computer program product can also be transmitted via a carrier wave in a network, such as a LAN, a WAN or the Internet. Transmission media can take the form of acoustic or light waves, such as those generated during radio wave and infrared data communications. Transmission media include coaxial cables, copper wire and fiber optics, including the wires that comprise a bus within a computer.

While the invention has been illustrated and described in detail in the drawings and foregoing description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims. In the claims, the indefinite article "a" or "an" does not exclude a plurality. The mere fact that certain measures are recited in mutually different dependent claims does not indicate that a combination of these measures cannot be used to advantage.

A single unit may fulfil the functions of several items recited in the claims. Any reference signs in the claims should not be construed as limiting the scope.

**Claims**

1. A driving assistance method comprising:

   a) probabilistically estimating actual and/or future behavior of people and/or a driving system driving a first traffic participant and of a second traffic object or second traffic participant, respectively, the second traffic object or second traffic participant being different from the first traffic participant,
   b) probabilistically estimating, based on the estimated actual and/or future behaviors and environmental structures and/or constraints, a plurality of possible trajectories to be taken by the first traffic participant and/or a plurality of possible trajectories to be taken by the second traffic object or second traffic participant,
   c) determining risk of collision of the first traffic participant relative to the second traffic object or second traffic participant by calculating information adapted for risk assessment of collision of the first traffic participant relative to the second traffic object or second traffic participant, based on a combination of said probabilistic behavior estimation with said probabilistic trajectory information,
   d) outputting the information provided after step a), step b) and/or step c).

2. The method of claim 1, wherein the traffic participant being a vehicle, and the probabilistically estimating actual and/or future behavior comprising estimating the probability that a vehicle has executed a certain behavior in the past on observations and any information obtainable from the vehicle which provides an indication as to the behavior.

3. The method according to claim 1, further comprising:

   e) controlling the behavior of the first traffic participant based on the information provided after step a), step b) and/or step c).

4. The method according to claim 1, 2, or 3 comprising the step of displaying the information as a signal which is indicative for the risk of collision based on vehicle risk behavior over a time period in the past and/or for the future.

5. The method according to one of the preceding claims, comprising the step of performing a predetermined action based on the information provided after step a), step b) and/or step c).

6. The method according to one of the preceding claims, comprising the step of performing a geometrical transformation for an adaptation of a Gaussian process.

7. The method according to claim 6, wherein the geometrical transformation comprises Least Squares Conformal Mapping.

8. The method according to one of the preceding claims, comprising the step of measuring trajectory, speed, steering, forward and/or lateral acceleration of the first and/or second traffic object or second traffic participant.

9. The method according to one of the preceding claims, comprising the step of detecting and/or tracking of a position and/or orientation of the first and/or second traffic object or second traffic participant.

10. The method according to one of the preceding claims, comprising the step of applying a Hidden Markov Model and/or a variant of the Hidden Markov Model.

11. A driving assistance system comprising:

- a behavior estimator (1) configured to probabilistically estimate actual and/or future behavior of people and/or a driving system driving a first traffic participant, and of a second traffic object or second traffic participant, respectively, the second traffic object or second traffic participant being different from the first traffic participant, wherein the behavior estimator (1) is further configured to estimate a plurality of possible trajectories to be taken by the first traffic participant and/or a plurality of possible trajectories to be taken by the second traffic object or second traffic participant based on the estimated actual and/or future behaviors and environmental structures and/or constraints,
- a risk estimator (4) configured to determine risk of collision of the first traffic participant relative to the second traffic object or second traffic participant by calculating information, the information comprising an output probability value, adapted for risk assessment of collision of the first traffic participant relative to the second traffic object or second traffic participant, and
- means for outputting the information provided by the risk estimator (4) and/or by the behavior estimator (1), wherein the behavior estimator is further adapted for probabilistically estimating actual and/or future behavior of the first traffic participant, and
- the output probability value is based on a combination of said probabilistic behavior estimation with said probabilistic trajectory estimation.

12. The system of claim 11, wherein the first traffic participant comprises a vehicle, and the probabilistically estimating actual and/or future behavior comprises estimating the probability that a vehicle has executed a certain behavior in the past on observations and any information obtainable from the vehicle which provides an indication as to the behavior.

13. The system of claim 11 or 12, further comprising a behavior realizing unit (2) adapted for controlling the behavior of the first traffic participant based on the information provided by the risk estimator (4) and/or by the behavior estimator (1).

14. The system according to claim 11, 12, or 13, wherein a display is provided and adapted for displaying the information as a signal which is indicative for the risk of collision based on vehicle risk behavior over a time period in the past and/or for the future.

15. The system according to one of claims 11 to 14, wherein the signal comprises an audio signal, a visual signal and/or a tactile signal.

**16.** The system according to one of claims 11 to 15, wherein a user and/or a control unit performs a predetermined action based on the information provided by the risk estimator (4) and/or the behavior estimator (1).

**17.** The system according to one of claims 11 to 15, wherein the behavior realizing unit (2) is adapted for performing a geometrical transformation for an adaptation of a Gaussian process.

**18.** A computer program comprising instructions for carrying out the steps the method according to any one of claims 1 to 10, when said computer program is executed on the processing engine.

**19.** A machine readable signal storage medium with the computer program of claim 18 stored thereon.


**Patentansprüche**

**1.** Fahrassistenzverfahren, umfassend:

a) probabilistisches Schätzen des aktuellen und/oder zukünftigen Verhaltens von Menschen und/oder eines Fahrsystems, das einen ersten Verkehrsteilnehmer befördert, bzw. eines zweiten Verkehrsobjekts oder eines zweiten Verkehrsteilnehmers, wobei sich das zweite Verkehrsobjekt oder der zweite Verkehrsteilnehmer von dem ersten Verkehrsteilnehmer unterscheidet,
b) probabilistisches Schätzen auf der Grundlage des geschätzten aktuellen und/oder zukünftigen Verhaltens und umgebender Strukturen und/oder Beschränkungen von mehreren möglichen von dem ersten Verkehrsteilnehmer einzuschlagenden Trajektorien und/oder mehreren möglichen von dem zweiten Verkehrsobjekt oder dem zweiten Verkehrsteilnehmer einzuschlagenden Trajektorien,
c) Ermitteln des Risikos einer Kollision des ersten Verkehrsteilnehmers relativ zu dem zweiten Verkehrsobjekt oder dem zweiten Verkehrsteilnehmer durch Berechnen von Informationen, die für die Bewertung des Risikos einer Kollision des ersten Verkehrsteilnehmers relativ zu dem zweiten Verkehrsobjekt oder dem zweiten Verkehrsteilnehmer adaptiert sind, auf der Grundlage einer Kombination der probabilistischen Verhaltensschätzung mit den probabilistischen Trajektoriendaten,
d) Ausgeben der nach Schritt a), Schritt b) und/oder Schritt c) bereitgestellten Informationen.

**2.** Verfahren nach Anspruch 1, wobei der Verkehrsteilnehmer ein Fahrzeug ist und das probabilistische Schätzen des aktuellen und/oder zukünftigen Verhaltens das Schätzen der Wahrscheinlichkeit, dass ein Fahrzeug in der Vergangenheit ein bestimmtes Verhalten ausgeführt hat, aufgrund von Beobachtungen und jedweden von dem Fahrzeug erhältlichen Informationen, die eine Angabe in Bezug auf das Verhalten bereitstellen, umfasst.

**3.** Verfahren nach Anspruch 1, ferner umfassend:

e) Steuern des Verhaltens des ersten Verkehrsteilnehmers auf der Grundlage der nach Schritt a), Schritt b) und/oder Schritt c) bereitgestellten Informationen.

**4.** Verfahren nach Anspruch 1, 2 oder 3, umfassend den Schritt des Anzeigens der Informationen als Signal, welches das Risiko einer Kollision auf der Grundlage des Fahrzeugrisikoverhaltens über einen Zeitraum in der Vergangenheit und/oder für die Zukunft angibt.

**5.** Verfahren nach einem der vorhergehenden Ansprüche, umfassend den Schritt des Durchführens einer vorgegebenen Handlung auf der Grundlage der nach Schritt a), Schritt b) und/oder Schritt c) bereitgestellten Informationen.

**6.** Verfahren nach einem der vorhergehenden Ansprüche, umfassend den Schritt des Durchführens einer geometrischen Transformation für eine Adaptierung eines Gauß-Prozesses.

**7.** Verfahren nach Anspruch 6, wobei die geometrische Transformation Least Squares Conformal Mapping umfasst.

**8.** Verfahren nach einem der vorhergehenden Ansprüche, umfassend den Schritt des Messens von Trajektorie, Geschwindigkeit, Lenkung, Vorwärts- und/oder Querbeschleunigung des ersten und/oder zweiten Verkehrsobjekts oder des zweiten Verkehrsteilnehmers.

**9.** Verfahren nach einem der vorhergehenden Ansprüche, umfassend den Schritt des Detektierens und/oder Nachverfolgens einer Position und/oder Ausrichtung des ersten und/oder zweiten Verkehrsobjekts oder des zweiten Verkehrsteilnehmers.

10. Verfahren nach einem der vorhergehenden Ansprüche, umfassend den Schritt des Anwendens eines Hidden Markov Modells und/oder einer Variante des Hidden Markov Modells.

11. Fahrassistenzsystem, umfassend:

- einen Verhaltensschätzer (1), der dazu konfiguriert ist, das aktuelle und/oder zukünftige Verhalten von Menschen und/oder eines Fahrsystems, das einen ersten Verkehrsteilnehmer befördert, bzw. eines zweiten Verkehrsobjekts oder zweiten Verkehrsteilnehmers probabilistisch zu schätzen, wobei sich das zweite Verkehrsobjekt oder der zweite Verkehrsteilnehmer von dem ersten Verkehrsteilnehmer unterscheidet, wobei der Verhaltensschätzer (1) ferner dazu konfiguriert ist, mehrere mögliche von dem ersten Verkehrsteilnehmer einzuschlagende Trajektorien und/oder mehrere mögliche von dem zweiten Verkehrsobjekt oder dem zweiten Verkehrsteilnehmer einzuschlagende Trajektorien auf der Grundlage des geschätzten aktuellen und/oder zukünftigen Verhaltens und umgebender Strukturen und/oder Beschränkungen zu schätzen,
- einen Risikoschätzer (4), der dazu konfiguriert ist, das Risiko einer Kollision des ersten Verkehrsteilnehmers relativ zu dem zweiten Verkehrsobjekt oder dem zweiten Verkehrsteilnehmer durch Berechnen von Informationen zu ermitteln, wobei die Informationen einen Ausgabewahrscheinlichkeitswert umfassen, der zur Bewertung des Risikos einer Kollision des ersten Verkehrsteilnehmers in Bezug auf das zweite Verkehrsobjekt oder den zweiten Verkehrsteilnehmer adaptiert ist, und
- Mittel zum Ausgeben der Informationen, die durch den Risikoschätzer (4) und/oder durch den Verhaltensschätzer (1) bereitgestellt werden, wobei der Verhaltensschätzer ferner dazu adaptiert ist, das aktuelle und/oder zukünftige Verhalten des ersten Verkehrsteilnehmers probabilistisch zu schätzen, und
- der Ausgabewert auf einer Kombination der probabilistischen Verhaltensschätzung mit den probabilistischen Trajektoriendaten beruht.

12. System nach Anspruch 11, wobei der erste Verkehrsteilnehmer ein Fahrzeug umfasst und das probabilistische Schätzen des aktuellen und/oder zukünftigen Verhaltens das Schätzen der Wahrscheinlichkeit, dass ein Fahrzeug in der Vergangenheit ein bestimmtes Verhalten ausgeführt hat, aufgrund von Beobachtungen und jedweden von dem Fahrzeug erhältlichen Informationen, die eine Angabe in Bezug auf das Verhalten bereitstellen, umfasst.

13. System nach Anspruch 11 oder 12, ferner umfassend eine Verhaltensrealisierungseinheit (2), die dazu adaptiert ist, das Verhalten des ersten Verkehrsteilnehmers auf der Grundlage der Informationen, die durch den Risikoschätzer (4) und/oder den Verhaltensschätzer (1) bereitgestellt werden, zu steuern.

14. System nach Anspruch 11, 12 oder 13, wobei eine Anzeige vorgesehen und zum Anzeigen der Informationen als Signal adaptiert ist, welches das Risiko einer Kollision auf der Grundlage des Fahrzeugrisikoverhaltens über einen Zeitraum in der Vergangenheit und/oder für die Zukunft angibt.

15. System nach einem der Ansprüche 11 bis 14, wobei das Signal ein akustisches Signal, ein optisches Signal und/oder ein fühlbares Signal umfasst.

16. System nach einem der Ansprüche 11 bis 15, wobei ein Benutzer und/oder eine Steuereinheit eine vorgegebene Handlung auf der Grundlage der Informationen durchführt, die von dem Risikoschätzer (4) und/oder dem Verhaltensschätzer (1) bereitgestellt werden.

17. System nach einem der Ansprüche 11 bis 15, wobei die Verhaltensrealisierungseinheit (2) zum Durchführen einer geometrischen Transformation für eine Adaptierung eines Gauß-Prozesses ausgebildet ist.

18. Rechnerprogramm, umfassend Anweisungen zum Durchführen der Schritte des Verfahrens nach einem beliebigen der Ansprüche 1 bis 10, wenn das Rechnerprogramm auf der Verarbeitungs-Engine abgearbeitet wird.

19. Maschinenlesbares Signalspeichermedium mit dem darauf gespeicherten Rechnerprogramm nach Anspruch 18.

**Revendications**

1. Procédé d'aide à la conduite comprenant :

   a) l'estimation probabiliste du comportement actuel et/ou futur de personnes et/ou d'un système de conduite conduisant un premier participant au trafic et d'un second objet de trafic ou second participant au trafic, respectivement, le second objet de trafic ou second participant au trafic étant différent du premier participant au trafic ;
   b) l'estimation probabiliste sur la base des comportements actuels et/ou futurs estimés et des structures et/ou des contraintes environnementales de plusieurs trajectoires possibles à prendre par le premier participant au trafic et/ou de plusieurs trajectoires possibles à prendre par le second objet de trafic ou second participant au trafic ;
   c) la détermination d'un risque de collision du premier participant au trafic par rapport au second objet de trafic ou second participant au trafic en calculant une information adaptée pour une évaluation de risque de collision du premier participant au trafic par rapport au second objet de trafic ou second participant au trafic sur la base d'une combinaison de ladite estimation de comportement probabiliste avec ladite information de trajectoire probabiliste ;
   d) la sortie de l'information fournie après l'étape a), l'étape b) et/ou l'étape c).

2. Procédé selon la revendication 1, dans lequel le participant au trafic est un véhicule, et l'estimation probabiliste du comportement actuel et/ou futur comprend l'estimation de la probabilité pour qu'un véhicule a eu un certain comportement dans le passé sur des observations et toute information pouvant être obtenue à partir du véhicule qui fournit une indication en ce qui concerne le comportement.

3. Procédé selon la revendication 1, comprenant en outre :

   e) la commande du comportement du premier participant au trafic en se basant sur l'information fournie après l'étape a), l'étape b) et/ou l'étape c).

4. Procédé selon la revendication 1, 2 ou 3, comprenant l'étape d'affichage de l'information sous forme d'un signal qui est représentatif du risque de collision basé sur le comportement risqué du véhicule sur une période de temps dans le passé et/ou pour le futur.

5. Procédé selon l'une des revendications précédentes, comprenant l'étape consistant à effectuer une action prédéterminée en se basant sur l'information fournie après l'étape a), l'étape b) et/ou l'étape c).

6. Procédé selon l'une des revendications précédentes, comprenant l'étape consistant à effectuer une transformation géométrique pour une adaptation d'un traitement gaussien.

7. Procédé selon la revendication 6, dans lequel la transformation géométrique comprend une transposition conforme par les moindres carrés.

8. Procédé selon l'une des revendications précédentes, comprenant l'étape consistant à mesurer la trajectoire, la vitesse, le braquage, l'accélération vers l'avant et/ou latérale du premier et/ou second objet de trafic ou second participant au trafic.

9. Procédé selon l'une des revendications précédentes, comprenant l'étape consistant à détecter et/ou à suivre une position et/ou une orientation du premier et/ou second objet de trafic ou second participant au trafic.

10. Procédé selon l'une des revendications précédentes, comprenant l'étape consistant à appliquer un modèle caché de Markov et/ou une variante du modèle caché de Markov.

11. Système d'aide à la conduite comprenant :

    - un estimateur de comportement (1) configuré pour l'estimation probabiliste du comportement actuel et/ou futur de personnes et/ou d'un système de conduite conduisant un premier participant au trafic, et d'un second objet de trafic ou second participant au trafic, respectivement, le second objet de trafic ou second participant au trafic étant différent du premier participant au trafic, dans lequel l'estimateur de comportement (1) est en outre configuré pour l'estimation de plusieurs trajectoires possibles à prendre par le premier participant au trafic et/ou plusieurs trajectoires possibles à prendre par le second objet de trafic ou second participant au trafic sur la base des comportements actuels et/ou futurs estimés et des structures et/ou contraintes environnementales ;

- un estimateur de risque (4) configuré pour la détermination d'un risque de collision du premier participant au trafic par rapport au second objet de trafic ou second participant au trafic en calculant une information, l'information comprenant une valeur de probabilité de sortie, adaptée pour une évaluation de risque de collision du premier participant au trafic par rapport au second objet de trafic ou second participant au trafic ; et

- un moyen destiné à sortir l'information fournie par l'estimateur de risque (4) et/ou par l'estimateur de comportement (1), dans lequel l'estimateur de comportement est de plus adapté pour l'estimation probabiliste d'un comportement actuel et/ou futur du premier participant au trafic ; et

- la valeur de probabilité de sortie est basée sur une combinaison de ladite estimation de comportement probabiliste avec ladite information de trajectoire probabiliste.

12. Système selon la revendication 11, dans lequel le premier participant au trafic comprend un véhicule, et l'estimation probabiliste du comportement actuel et/ou futur comprend l'estimation de la probabilité pour qu'un véhicule a eu un certain comportement dans le passé sur des observations et toute information pouvant être obtenue à partir du véhicule qui fournit une indication en ce qui concerne le comportement.

13. Système selon la revendication 11 ou 12, comprenant en outre une unité (2) de réalisation de comportement destinée à commander le comportement du premier participant au trafic en se basant sur l'information fournie par l'estimateur de risque (4) et/ou par l'estimateur de comportement (1).

14. Système selon la revendication 11, 12 ou 13, dans lequel un afficheur est prévu et apte à afficher l'information sous forme d'un signal qui est représentatif pour le risque de collision basé sur un comportement risqué de véhicule sur une période de temps dans le passé et/ou pour le futur.

15. Système selon l'une des revendications 11 à 14, dans lequel le signal comprend un signal audio, un signal visuel et/ou un signal tactile.

16. Système selon l'une des revendications 11 à 15, dans lequel un utilisateur et/ou une unité de commande effectue une action prédéterminée en se basant sur l'information fournie par l'estimateur de risque (4) et/ou l'estimateur de comportement (1).

17. Système selon l'une des revendications 11 à 15, dans lequel l'unité (2) de réalisation de comportement est apte à effectuer une transformation géométrique pour une adaptation d'un traitement gaussien.

18. Programme informatique comprenant des instructions destinées à mettre en oeuvre les étapes du procédé selon l'une quelconque des revendications 1 à 10, lorsque ledit programme informatique est exécuté sur le moteur de traitement.

19. Support de mémorisation de signal lisible par machine sur lequel est mémorisé le programme informatique selon la revendication 18.

Fig. 1

$L_1(O_{1;t})$

$L_N(O_{1;t})$

Fig. 2

Fig. 3

Fig. 4

17

15

19

18

Fig. 5

22

$O_i$

20

$U^{-1}(O_i)$

17

18

21

Fig. 6

Fig. 7

**EP 2 289 754 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006021813 A1
- US 20080309468 A
- US 2008309468 A1